# EUROPEAN PATENT APPLICATION

(11) **EP 2 108 442 A1**
(43) Date of publication of application: **14.10.2009**
(21) Application number: 09155679.5
(22) Date of filing: 20.03.2009
(51) Int. Cl.: B01D 61/20, B01D 63/06, B01D 65/02, B65G 45/14

(54) **Filtration machine for tangential filtration**

(30) Priority: 25.03.2008 IT TV20080046
(71) Applicant: VELO Spa, 31030 Altivole (Treviso) (IT)
(72) Inventor: Velo, Antonio, 31031 Caerano San Marco (TV) (IT)
(74) Representative: Dragotti, Gianfranco

(57) **Abstract**

A machine for the filtration of a liquid which contains suspended particles is described, said machine comprising one or more filter elements arranged in series or parallel so as to form a set and formed by a bundle of tubular membranes, **characterized in that** it comprises means for scraping the suspended particles from the inlet of a filter element.

## Description

The invention relates to a filtration apparatus or machine, useful for the application of tangential filtration to liquids which contain suspended particles and/or clogging solids.

Although the invention is useful for the treatment of any plant product in pressed form or a generic liquid product with suspended solids which have an aggregating capacity, the following description will refer by way of example to vinification processes, a sector in which the invention has proved to be particularly effective.

In wine treatment processes the pressed product must be filtered using tangential filters with capillary membranes (similar to small tubes), usually a bundle of tubular membranes, with a certain diameter and with a precise distribution of the pores, through which the pressed product flows so as to emerge therefrom perfectly clear. The filters are generally many in number and arranged in series or parallel.

For certain types of pressed product the membranes tend to clog owing to colloids and/or filament-like organic fibres in the pressed product which have diameters greater than or comparable to that of a tubular membrane. In the case of filtration of industrial liquids the filaments may, however, be of an organic or inorganic nature.

The object of the present invention is to solve the abovementioned problem of clogging.

This object is achieved with a machine for the filtration of a liquid which contains suspended particles, comprising one or more filter elements arranged in series or parallel so as to form a set and formed by a bundle of tubular membranes, characterized in that it comprises means for scraping the suspended particles from the inlet of a filter element.

Preferred variants for the machine, to be implemented alone or in combination, are obtained if:
- the machine comprises several filter elements arranged in series or parallel so as to form a set where each element of the set is equipped with scraping means (maximum guarantee of no clogging);
- the scraping means are arranged directly at the inlet of the said bundle (maximum efficiency of the scraper means);
- the machine comprises means for a form-fit connection between the scraping means and the inlet of a filter element (simple connection ensured);
- the form-fit connection means comprise an end section with a shape matching that of the end of the filter element, preferably a hollow cylindrical section (the connection is performed by means of simple engagement);
- the scraping means comprise a scraper element which is mounted movably with its edge in close contact with or lightly pressing against the inlet of said bundle;
- the scraper element is a blade made of flexible material, for example rubber;
- the scraping means comprise drive means for causing rotation of the scraper element (a convenient design, although the scraper element could move with another motion, e.g. an alternating to-and-fro movement;
- the scraper element is mounted radially on a shaft which extends inside a conveyor housing, the housing having an inlet for the liquid to be filtered and a remote outlet opening inside which the scraper element may move.

The invention also relates to the scraper means considered individually, i.e. a scraper device designed for insertion in a machine as described above, comprising (i) means for engagement with a filter element and (ii) a scraper element mounted movably and so as to remain with its edge in close contact with or lightly pressing against the inlet of said bundle. Preferred variants of the scraper device are as follows:
- the engaging means comprise a section with a shape matching the inlet of a filter element so as to form a form-fit connection together therewith, where preferably the section of matching shape is a hollow cylindrical segment which can be applied to the end of the filter element;
- the scraper element is a blade made of flexible material, for example rubber;
- there are drive means for causing rotation of the scraper element;
- the scraper element is mounted radially on a shaft which extends inside a conveyor housing, the housing having an inlet for the liquid to be filtered and a remote outlet opening which can be fixed on the end of the filter element and inside which the scraper element can move.

It is also possible to provide a novel filter element starting from a known element and incorporating in the inlet end a scraper device as described. Thus the invention concerns a filter element for a machine for the filtration of a liquid which contains suspended particles, the filter element being formed by a bundle of tubular membranes, characterized in that it comprises a scraper device incorporated in the inlet end, the device having a scraper element mounted movably and so as to remain with its edge in close contact with or lightly pressing against the inlet of the said bundle.

Preferably in the filter element:
- the scraper element is a blade made of flexible material, for example rubber;
- drive means are present for causing rotation of the scraper element;
- the scraper element is mounted radially on a shaft which extends inside a conveyor housing, the housing having an inlet for the liquid to be filtered and a remote outlet opening which is situated at the inlet of the filter element and inside which the scraper element may move.

A preferred embodiment of the invention will now be described with reference to the accompanying drawing, where
Fig. 1 shows a diagram of a machine according to the invention;
Fig. 2 shows a side view, sectioned along the vertical axis, of a device of the machine shown in Fig. 1.
Fig. 3 shows a front view of the device shown in Fig. 2;
Fig. 4 shows an axonometric view of a detail of the device according to Fig. 2;
Fig. 5 shows an axonometric view of the device according to Fig. 2 when not applied to a membrane filter.

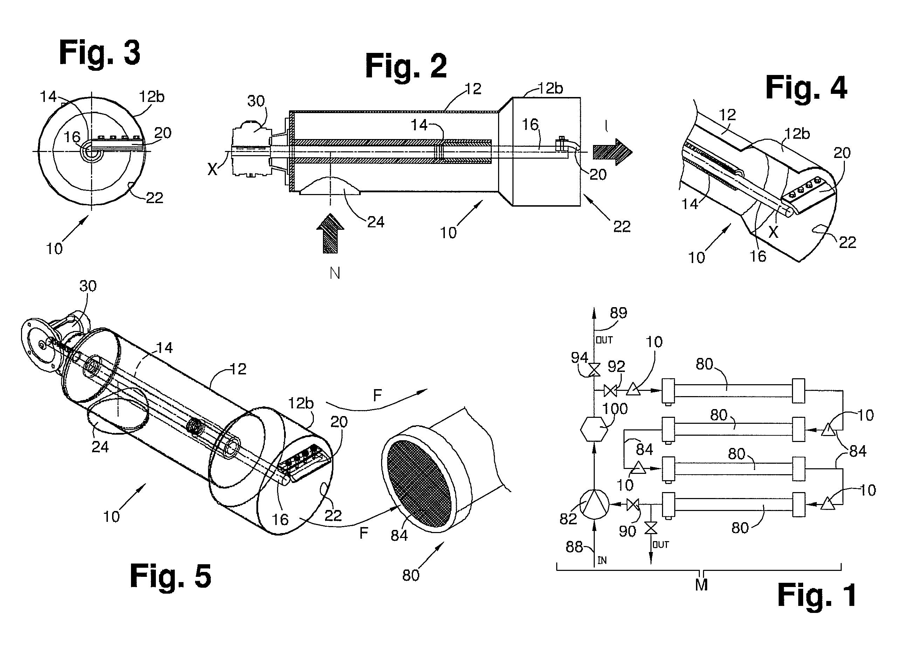

With reference to the block diagram in Fig. 1, a filtering machine assembly M comprises a set of filter elements 80 arranged in series (or also in parallel, not shown), namely the outlet of one element is connected to the inlet of the other element by means of a system of pipes 84. The arrows indicate the direction of flow of the fluid to be filtered.

The fluid is supplied by a system of feed pipes 88, which draw it from a remote storage tank (not shown) or from a branch line inside a treatment plant in which the machine M is incorporated. A pump 82 ensures the necessary flow of fluid into the filter set.

At the outlet of the last element 80 of the series a valve 90 is present for selecting whether to recirculate the filtered liquid to the pump 82 or cause it to flow out of the machine M.

The pump 82 preferably has its delivery side connected to a pulverizing mill 100, the outlet of which conveys the liquid either to inlet of the set and/or outside of the machine M, via a system of pipes 89, by suitably selecting the state of two valves 92 , 94.

A scraper and pulverizer device 10 is situated at the inlet of a filter element 80, and preferably of all the filter elements, said device being composed (see Figs. 2-5) of a hollow cylindrical body 12, which forms a conveyor housing for the fluid to be filtered, having a flared outlet section 12b which has a larger-diameter circular opening 22. The section 12b has the function of connecting the device 10 to the inlet of a known filter element 80 comprising tubular membranes 84, in particular by applying it to one end thereof (see Fig. 5). In general, depending on the shape of the end of the element 80, the device 10 can be equipped with an end section of matching shape (see Fig. 5, F indicates the direction of engagement as well as direction of flow of the fluid). Known connection means, such as clamps and/or seals, may be arranged on the section12b for mating with the element 80.

A hollow support sleeve 14 extends coaxially from the centre of an (end) wall 30 of the body 12 and has, rotatably arranged inside it, a shaft 16 which can be rotated (about an axis X) by a gear motor 28 fixed on the outside of the wall 30.

A scraper blade 20 is mounted, radially and eccentrically with respect to the axis X, at the free end of the shaft 16, which extends as far as the opening 22. The blade 20 is positioned on the shaft 16 so that its edge is contained in the plane of the opening 22 or slightly away from it. The section 12b is in fact applied sealingly and coaxially onto the element 80, e.g. engaged onto its front end, so that the edge of the blade 20 can slide in circular fashion over and in contact with the membranes 84 without, however, pressing excessively against them (which would damage them).

Any small deviation of the edge of the blade 20 away from the plane of the opening 22 takes into account the assembly tolerances of the device 10 and the manufacturing tolerances of the filter element 80.

When the device 10 is active, the motor 18 operates and causes rotation of the blade 20 on the membrane 84. The fluid entering via an inlet point 24 flows axially inside the body 12 and enters into the membranes 84. Larger size residues are deposited naturally on the inlet of the membranes 84, but the scraping action of the blade 20 ensures their continuous removal. The main effect of the device 10 is to remove particles deposited on the membranes 84, causing them to flow out through said membranes under the pressure of the fluid flow. By preventing clogging or the formation of plugs on the membranes 84, their efficiency is improved, avoiding preferential directions for the fluid to be filtered. Secondly, the particles which are scraped by the blade 20 necessarily rub against and are drawn over the membranes 84, resulting in a slight pulverization effect.

Therefore, it has been shown that the invention achieves the predefined object. It should be noted that the results are especially significant when, as a result of the filtering process, the processed fluid thickens, forming a purée.

## Claims

1. Machine (M) for the filtration of a liquid which contains suspended particles, comprising one or more filter elements (80) arranged in series or parallel so as to form a set and formed by a bundle of tubular membranes, **characterized in that** it comprises means (10) for scraping the suspended particles from the inlet of a filter element (80).

2. Machine (M) according to Claim 1, comprising several filter elements (80) arranged in series so as to form a set where each element of the set is equipped with scraping means (10).

3. Machine (M) according to Claims 1 or 2, in which the scraping means (10) are arranged directly at the inlet of said bundle.

4. Machine (M) according to Claim 3, comprising form-fit connecting means (12b) between the scraping means (10) and the inlet of a filter element (80).

5. Machine (M) according to Claim 4, in which the form-fit connection means (12b) comprise an end section with a shape matching the end of the filter element (80), preferably a hollow cylindrical section.

6. Machine (M) according to any one of Claims 3 to 5, in which the scraping means (10) comprise a scraper element (20) which is mounted movably with its edge in close contact with or lightly pressing against the inlet of said bundle.

7. Machine (M) according to Claim 6, in which the scraper element (20) is a blade made of flexible material, e.g. rubber.

8. Machine (M) according to Claims 6 or 7, in which the scraping means (10) comprise drive means for causing rotation of the scraper element (20).

9. Machine (M) according to Claim 8, in which the scraper element (20) is mounted radially on a shaft which extends inside a conveyor housing, the housing having an inlet for the liquid to be filtered and a remote outlet opening inside which the scraper element (20) can move.

10. Scraper device (10) designed for incorporation in a machine according to one of Claims 1 to 9, comprising means for engagement with a filter element (80) and a scraper element (20) mounted movably and so as to remain with its edge in close contact with or lightly pressing against the inlet of said bundle.

11. Device (10) according to Claim 10, in which the engaging means comprise a section with a shape matching the inlet of a filter element (80) so as to realise a form-fit connection together therewith.

12. Device (10) according to Claim 11, in which the section with a matching shape (12b) is a hollow cylindrical segment which can be applied onto the end of the filter element (80).

13. Device (10) according to one of Claims 10 to 12, in which the scraper element (20) is a blade made of flexible material, e.g. rubber.

14. Device (10) according to one of Claims 10 to 13, comprising drive means for causing rotation of the scraper element (20).

15. Device (10) according to one of Claims 10 to 14, in which the scraper element (20) is mounted radially on a shaft which extends inside a conveyor housing, the housing having an inlet for the liquid to be filtered and a remote outlet opening which can be fixed onto the end of the filter element (80) and inside which the scraper element (20) can move.

16. Filter element for a machine for the filtration of a liquid which contains suspended particles, the filter element being formed by a bundle of tubular membranes, **characterized in that** it comprises a scraper device incorporated in the inlet end, the device having a scraper element mounted movably and so as to remain with its edge in close contact with or lightly pressing against the inlet of the said bundle.

17. Filter element according to Claim 16, in which the scraper element is a blade made of flexible material, for example rubber.

18. Filter element according to Claim 16 or 17, comprising drive means for causing rotation of the scraper element.

19. Filter element according to one of Claims 16 to 18, in which the scraper element is mounted radially on a shaft which extends inside a conveyor housing, the housing having an inlet for the liquid to be filtered and a remote outlet opening which is situated at the inlet of the filter element and inside which the scraper element can move.
